# EUROPEAN PATENT APPLICATION

(11) **EP 0 596 439 A2**
(43) Date of publication of application: **11.05.1994**
(21) Application number: 93117676.2
(22) Date of filing: 02.11.1993
(51) Int. Cl.: G11B 7/26

(54) **Method of making a master disc usable for the production of optical discs**

(30) Priority: 05.11.1992 JP 295620/92; 12.11.1992 JP 302023/92
(71) Applicant: MATSUSHITA ELECTRIC INDUSTRIAL CO., LTD., Kadoma-shi, Osaka-fu, 571 (JP)
(72) Inventor: Nagashima, Michiyoshi, Ikoma-shi, Nara-ken (JP); Ueno, Fumiaki, Hirakata-shi, Osaka-fu (JP); Takamoto, Kenji, Neyagawa-shi, Osaka-fu (JP); Kishi, Toshinori, Osaka-shi, Osaka-fu (JP); Miyamoto, Hisaki, Suita-shi, Osaka-fu (JP); Abe, Shinya, Neyagawa-shi, Osaka-fu (JP)
(74) Representative: Eisenführ, Speiser & Partner

(57) **Abstract**

Optical discs are duplicated from a master disc (M; M1; M2; M3; M4) having first and second signal patterns (15, 16; 18, 19; 24, 25; 36, 37; 44, 45) of different depths or heights. In making the master disc (M; M1; M2; M3; M4), a first photoresist film (11; 21; 31; 41) is initially formed on a disc substrate (1) by the use of, for example, a spin coating technique. A second photoresist film (12; 22; 32; 42) is subsequently formed on the substrate (1) so as to overlay the first photoresist film (11; 21; 31; 41). Thereafter, first and second beams (13, 14) having different intensities or wavelengths are focused on the substrate (1) so that desired portions of the first photoresist film (11; 21; 31; 41) and those of the second photoresist film (12; 22; 32; 42) may be exposed to the first and second beams (13, 14). Subsequent development of the substrate (1) results in removal of such desired portions, or remaining portions other than such desired portions, to thereby form the first and second signal patterns (15, 16; 18, 19; 24, 25; 36, 37; 44, 45) on the substrate (1).

## Description

### BACKGROUND OF THE INVENTION

### Field of the Invention

The present invention relates to a method of making a master disc usable for the production of optical discs having information recorded therein at a high density.

### Description of the Prior Art

A master disc usable for the production of optical discs is generally made by coating a photoresist film on a disc substrate made of glass of which the surface has been ground; partially exposing the photoresist film to a laser beam intensity-modulated according to information to be recorded; and developing the substrate with the photoresist film to thereby form signal pits or grooves each having a depth corresponding to the extent to which the photoresist film has been exposed to the laser beam.

Reproduction of high-density optical discs can be achieved by reducing the wavelength of a laser beam to be radiated thereto or by enlarging the numerical aperture (NA) of an objective lens by which the laser beam is converged. In practice, however, the wavelength of the laser beam has a limitation of 670 nm, while the numerical aperture of the objective lens has a limitation of 0.6.

In view of this fact, some methods have hitherto been proposed which depend upon neither the reduction in wavelength of the laser beam nor the enlargement of the numerical aperture of the objective lens. One of such methods is disclosed in Japanese Laid-open Patent Publication (unexamined) No. 54-136303 wherein the depth of signal pits formed in information tracks is radially alternately changed so that two radially adjoining signal pits may have different depths. For example, where the wavelength of the reproducing laser beam is represented by and the refractive index of the substrate of a replica, i.e., an optical disc is represented by n, the depth of a row of signal pits is chosen to be X/(4n) and that of another row of signal pits radially adjoining it is chosen to be x/(8n). During reproduction, a beam reflected from each signal pit is received by a light detector divided into two light detection segments. The sum of two signals from respective light detection segments is used to reproduce the row of signal pits having the depth of X/(4n), whereas the difference between the two signals is used to reproduce the row of signal pits having the depth of X/(8n). By doing so, because crosstalks between adjoining information tracks can be reduced, the pitch of the information tracks can be narrowed, thereby enabling high-density recording on the optical discs.

Japanese Laid-open Patent Publication (unexamined) No. 54-136303 discloses a method of forming two kinds of signal pits having different depths on a master disc. According to this method, the intensity of light is changed during recording of the signal pits. More specifically, light having a weak intensity is radiated to a substrate of the master disc during recording of shallow signal pits, whereas light having a strong intensity is radiated to the substrate during recording of deep signal pits. Subsequent development of the substrate results in formation of the two kinds of signal pits having different depths.

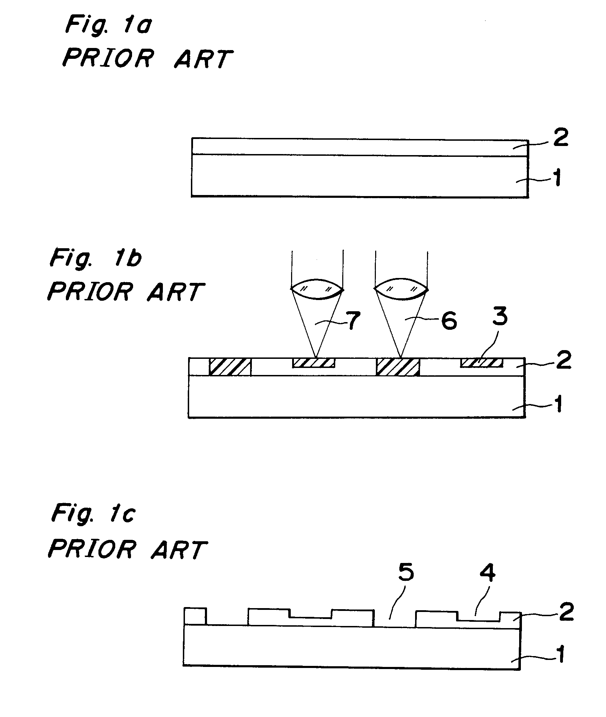

Figs. 1 a to 1 depict processes indicating such a conventional method.

One surface of a disc substrate 1 made of, for example, glass is initially flattened by grinding or the like, and a positive photoresist film 2 is subsequently formed thereon, as shown in Fig. 1 a, by the use of, for example, a spin coating technique.

Thereafter, as shown in Fig. 1 b, a first beam 6 of an intensity sufficient to allow the photoresist film 2 to be removed completely across its thickness during a subsequent developing process is radiated to portions of the surface of the disc substrate 1 where recording of the deep signal pits is desired. On the other hand, a second beam 7 of such an intensity as to allow the photoresist film 2 to be removed to a depth half the thickness thereof during the subsequent developing process is radiated to other portions of the surface of the disc substrate 1 where recording of the shallow signal pits is desired. In Fig. 1 b, the portions exposed to the beams 6 and 7 are indicated by hatching and are denoted by 3. Upon removing these portions 3 by the development, desired signal pits 4 and 5 having different depths are formed on the disc substrate 1. Fig. 1 depicts the master disc obtained in the above-described manner.

However, because the conventional method mentioned above requires appropriately controlling the light intensity to remove all or about half of the photoresist film 2 according to the location of the signal pits, variations in light intensity or those in developing conditions cause a change in depth of the signal pits. Accordingly, the above conventional method has difficulties in stably forming the two kinds of signal pits having different depths.

### SUMMARY OF THE INVENTION

The present invention has been developed to overcome the above-described disadvantages.

It is accordingly an object of the present invention to provide an improved method of making a master disc usable for the production of optical discs, which method is capable of stably forming two kinds of signal pits having different depths on the surface of the master disc.

In accomplishing the above and other objects, the method according to the present invention comprises the steps of:
(a) forming a first photoresist film on a substrate;
(b) forming a second photoresist film on the substrate so as to overlay the first photoresist film;
(c) exposing to a first beam first portions of the first photoresist film and first portions of the second photoresist film aligned with the first portions of the first photoresist film;
(d) exposing to a second beam second portions of only the second photoresist film, said second portions being separate from the first portions of the second photoresist film; and
(e) developing the substrate having the first and second photoresist films to thereby remove the first portions of the first photoresist film and the first and second portions of the second photoresist film.

Advantageously, a boundary layer is interposed between the first and second photoresist films. The boundary layer may be a modified layer formed on the surface of the first photoresist film by baking the first photoresist film. Alternatively, the boundary layer may be a modified layer formed on the surface of the first photoresist film by developing the first photoresist film. Again alternatively, a CEL (Contrast Enhanced Layer) can be used as the boundary layer.

Preferably, the first beam has an intensity sufficient to cause both of the first and second photoresist films to be exposed, and the second beam has an intensity sufficient to cause only the second photoresist film to be exposed. In this case, it is preferred that the first photoresist film has a sensitivity lower than that of the second photoresist film. The sensitivity of the first photoresist film can be made lower than that of the second photoresist film by baking the first photoresist film without the second photoresist film being baked. The baking treatment is effectively carried out in an atmosphere containing at least one of nitrogen, oxygen, argon, and krypton.

A pattern of signal pits recorded by the second beam has a depth equal to the thickness of the second photoresist film, because such a pattern is formed by those portions of the second photoresist film which are exposed to the second beam and are removed during the development. On the other hand, another pattern of signal pits recorded by the first beam has a depth equal to the sum of the thickness of the first photoresist film and that of the second photoresist film (and that of the boundary layer if this layer is interposed between the two photoresist films).

The boundary layer interposed between the two photoresist films not only prevents the second beam from entering the first photoresist film, but also makes good the configuration of signal pits recorded in the second photoresist film by flattening bottoms of such signal pits. If the boundary layer is interposed between the two photoresist films, the sensitivity of the first photoresist film may be the same as that of the second photoresist film.

Conveniently, the first and second photoresist films have different maximum absorption wavelengths. In this case, the first beam has a first wavelength capable of causing both of the first and second photoresist films to be exposed, while the second beam has a second wavelength capable of causing only the second photoresist film to be exposed.

Each of the first and second photoresist films may be of a positive type. In this case, the maximum absorption wavelength of the first photoresist film is so chosen as to be shorter than that of the second photoresist film. Furthermore, the first wavelength is so chosen as to be shorter than the maximum absorption wavelength of the first photoresist film, while the second wavelength is so chosen as to be longer than the maximum absorption wavelength of the first photoresist film, but shorter than the maximum absorption wavelength of the second photoresist film.

The method according to the present invention may further comprise, prior to the step (e), the steps of: developing the substrate having the first and second photoresist films to thereby form first and second recesses defined in the substrate and having different depths; and etching the substrate with the first and second photoresist films employed as a mask.

In another aspect of the present invention, a method of making the master disc having first and second signal patterns of different heights comprises the steps of:
(a) forming a first photoresist film on a substrate;
(b) forming a second photoresist film on the substrate so as to overlay the first photoresist film;
(c) exposing to a first beam first portions of the first photoresist film and first portions of the second photoresist film aligned with the first portions of the first photoresist film;
(d) exposing to a second beam second portions of only the first photoresist film, said second portions being separate from the first portions of the first photoresist film; and
(e) developing the substrate having the first and second photoresist films to thereby remove portions of the first and second photoresist films other than the first and second portions of the first and second photoresist films.

In this case, the use of negative photoresist films is preferred. Furthermore, the first photoresist film is so chosen as to have a maximum absorption wavelength longer than that of the second photoresist film. Also, the first beam is so chosen as to have a wavelength shorter than the maximum absorption wavelength of the second photoresist film, while the second beam is so chosen as to have a wavelength shorter than the maximum absorption wavelength of the first photoresist film, but longer than the maximum absorption wavelength of the second photoresist film.

### BRIEF DESCRIPTION OF THE DRAWINGS

The above and other objects and features of the present invention will become more apparent from the following description of preferred embodiments thereof with reference to the accompanying drawings, throughout which like parts are designated by like reference numerals, and wherein:
Figs. 1 a to 1 are side elevational views of a master disc indicating processes of a conventional method of making the master disc;
Figs. 2a to 2d are side elevational views of the master disc indicating processes of a method according to a first embodiment of the present invention;
Figs. 3a to 3e are views similar to Figs. 2a to 2d, but indicating processes of a method according to a second embodiment of the present invention;
Figs. 4a to 4c are views similar to Figs. 2a to 2d, but indicating processes of a method according to a third embodiment of the present invention;
Figs. 5a to 5e are views similar to Figs. 2a to 2d, but indicating processes of a method according to a fourth embodiment of the present invention; and
Figs. 6a to 6c are views similar to Figs. 2a to 2d, but indicating processes of a method according to a fifth embodiment of the present invention.

### DETAILED DESCRIPTION OF THE PREFERRED

### EMBODIMENTS

Referring now to the drawings, a plurality of preferred embodiments of the present invention are hereinafter discussed.

### Embodiment 1:

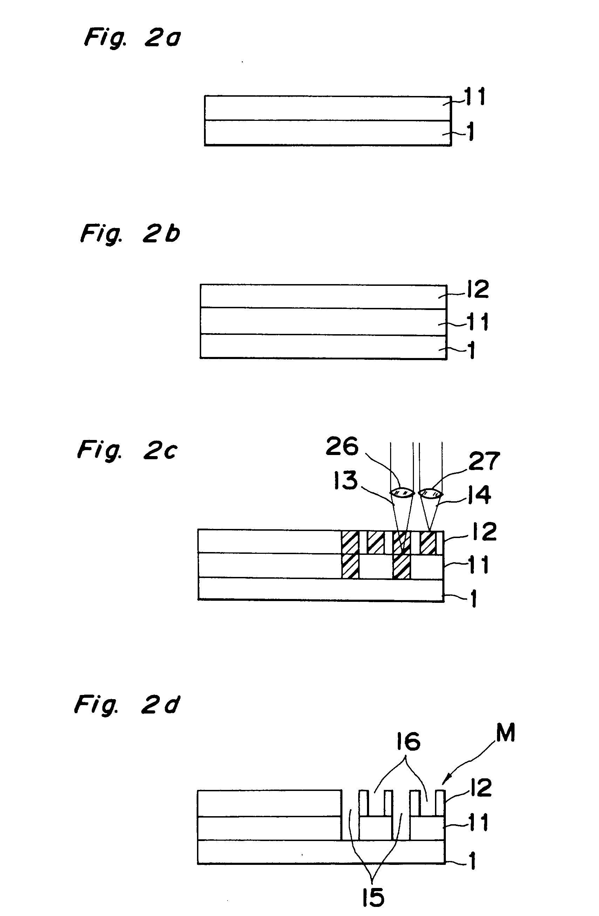

As shown in Fig. 2a, a first photoresist film 11 is initially formed on a disc substrate 1 by the use of, for example, a spin coating technique. A second photoresist film 12 having a sensitivity higher than that of the first photoresist film 11 is subsequently coated, as shown in Fig. 2b, over the first photoresist film 11. Thereafter, as shown in Fig. 2c, first and second beams 13 and 14 appropriately converged by first and second objective lenses 26 and 27, respectively, are radiated to desired portions of the first and second photoresist films 11 and 12. Subsequent development of the disc substrate 1 results in removal of such portions of the first and second photoresist films 11 and 12 exposed to the two beams 13 and 14.

A master disc M thus obtained is shown in Fig. 2d and has plural rows of signal pits 15 and 16 having different depths. A row of signal pits 15 formed by the first beam 13 and another row of signal pits 16 formed by the second beam 14 adjoin each other while extending either spirally or coaxially.

It is to be noted that the first beam 13 has an intensity sufficient to cause both of the first and second photoresist films 11 and 12 to be exposed, whereas the second beam 14 has an intensity sufficient to cause only the second photoresist film 12 to be exposed. During recording on the second photoresist film 12 by the second beam 14, the first photoresist film 11 disposed below the second photoresist film 12 is insensitive to and, therefore, is not exposed to the second beam 14 because the sensitivity of the first photoresist film 11 is lower than that of the second photoresist film 12.

The depth of the signal pits 15 is equal to the sum of the thickness of the first photoresist film 11 and the thickness of the second photoresist film 12, and that of the signal pits 16 is equal to the thickness of the second photoresist film 12.

The sensitivity of the first photoresist film 11 can be made lower than that of the second photoresist film 12 by conducting a baking treatment at 80 _{°} C for thirty minutes after the coating of the first photoresist film 11 without the second photoresist film 12 being baked.

### Embodiment 2:

The configuration of the signal pits can be improved by forming a boundary layer between the two photoresist films 11 and 12.

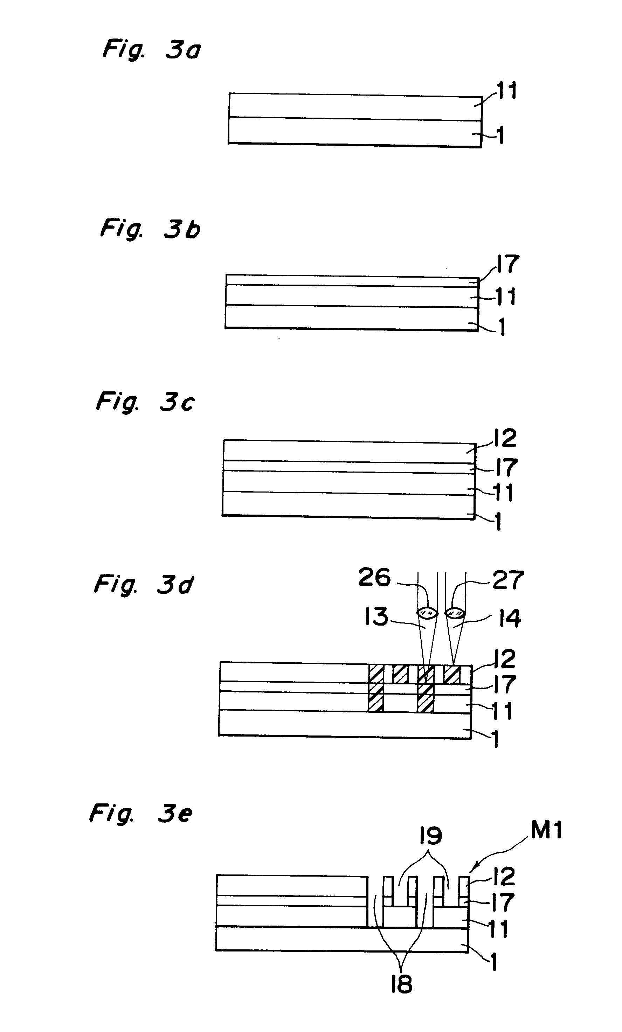

As is the case with the first embodiment, a first photoresist film 11 is initially formed on a substrate 1, as shown in Fig. 3a, by the use of the spin coating technique or the like. A contrast enhanced layer (CEL) is subsequently coated, as shown in Fig. 3b, over the first photoresist film 11, thereby forming a boundary layer 17. Then, a second photoresist film 12 is coated, as shown in Fig. 3c, over the boundary layer 17.

The CEL has a light absorbance considerably greater than that of the photoresist films 11 and 12, and the transmittance thereof is non-linear relative to the quantity of exposure. Because of this, the presence of the CEL enhances the contrast of imagewise light entering the first photoresist film 11 therethrough.

Thereafter, as shown in Fig. 3d, first and second beams 13 and 14 appropriately converged by first and second objective lenses 26 and 27, respectively, are radiated to the first and second photoresist films 11 and 12 for the recording of respective signal pits 18 and 19 on the substrate 1.

The first beam 13 has an intensity sufficient to cause both of the photoresist films 11 and 12 to be exposed, whereas the second beam 14 has an intensity sufficient to cause only the second photoresist film 12 to be exposed. During recording by the second beam 14, the first photoresist film 11 disposed below the boundary layer 17 is not exposed to the second beam 14 because the boundary layer 17 prevents the second beam 14 from entering the first photoresist film 11. Accordingly, the signal pits 19 can be configured into desired ones each having a flat bottom formed by the boundary layer 17.

Subsequent development of the substrate 2 and removal of the boundary layer 17 located below the signal pits 19 results in a master disc M1 as shown in Fig. 3e.

It is to be noted that the process of removing the boundary layer 17 can be omitted by the use of a water-soluble material manufactured by, for example, General Electric Co., Ltd. as the CEL because the CEL exposed to the second beam 14 dissolves together with the second photoresist film 12 during the developing process.

It is also to be noted that the CEL may be replaced by a modified layer formed on the surface of the first photoresist film 11. Such a modified layer can be formed, after the coating of the first photoresist film 11 over the substrate 1, by baking the substrate 1, for example, at 80 _{°} C for thirty minutes in an atmosphere containing at least one of nitrogen, oxygen, argon, and krypton.

Alternatively, the modified layer may be formed on the surface of the first photoresist film 11 by developing the substrate 1 after the coating of the first photoresist film 11 thereon.

As is the case with the first embodiment, the first photoresist film 11 may have a sensitivity lower than that of the second photoresist film 12. However, because the boundary layer 17 is interposed between the two photoresist films 11 and 12, the first photoresist film 11 may be identical with the second photoresist film 12.

Some other embodiments are discussed hereinafter wherein the signal pits of different depths are formed by radiating light of different wavelengths to two photoresist films having different maximum absorption wavelengths. In general, photosensitive materials have the property of being exposed to light having a wavelength shorter than a specific wavelength. The term "maximum absorption wavelength" as employed throughout this specification is defined as meaning the maximum wavelength of the spectral band of light which a certain photosensitive material absorbs.

### Embodiment 3:

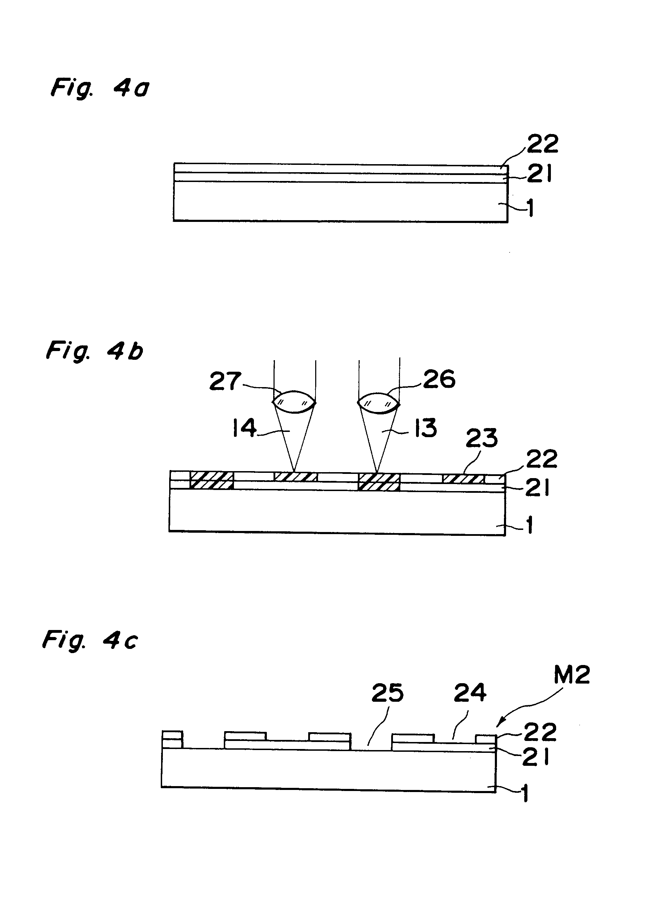

As shown in Fig. 4a, a substrate 1 made of, for example, glass having a surface flattened by grinding or the like is initially coated with a first positive photoresist by the use of, for example, the spin coating technique. The coated first positive photoresist is then baked to thereby form a first photoresist film 21. A second positive photoresist having a maximum absorption wavelength longer than that of the first photoresist film 21 is coated over the first photoresist film 21 by the use of the spin coating technique or the like to thereby form a second photoresist film 22.

Thereafter, a first beam 13 having a wavelength shorter than the maximum absorption wavelength of the first photoresist film 21 and a second beam 14 having a wavelength longer than the maximum absorption wavelength of the first photoresist film 21 but shorter than the maximum absorption wavelength of the second photoresist film 22 are intensity-modulated according to respective signals to be recorded using, for example, an optical modulator in which the electro-optical effect is utilized. As shown in Fig. 4b, upon throttling and radiating each of the first and second beams 13 and 14 to the substrate 1 coated with the two photoresist films 21 and 22, both of the first and second photoresist films 21 and 22 are partially simultaneously exposed to the first beam 13, while only the second photoresist film 22 is further partially exposed to the second beam 14. In Fig. 4b, portions exposed to the two beams 13 and 14 are indicated by hatching and are denoted by 23.

Subsequent development results in removal of the exposed portions 23 of only the second photoresist film 22 to thereby form shallow signal pits 24, and also simultaneous removal of the exposed portions 23 of the two photoresist film 21 and 22 to thereby form deep signal pits 25. Fig. 4c depicts a master disc M2 obtained in the above-described manner.

The depth of the shallow signal pits 24 is determined by the thickness of the second photoresist film 22, while the depth of the deep signal pits 25 is determined by the sum of the thickness of the first photoresist film 21 and that of the second photoresist film 22. Accordingly, the depth of the signal pits can be maintained substantially constant.

In producing optical discs, a stamper made of a metal such as, for example, nickel is prepared by the use of the master disc obtained in this way. Then, a large number of replicas are duplicated from the stamper with the use of, for example, an injection technique.

Any suitable material other than glass may be employed as the material of the substrate if the surface of the substrate can be flattened by any suitable means. For example, a metal such as nickel, copper or the like, or a synthetic resin such as an acrylic resin can be employed for the substrate.

The thickness of the first photoresist film 21 is so chosen as to be equal to a value obtained by dividing the thickness difference between the two kinds of signal pits 24 and 25 by the refractive index n of the substrate of the replica. On the other hand, the thickness of the second photoresist film 22 is so chosen as to be equal to the sum of the depth of the shallow signal pits 24 divided by the refractive index n of the substrate of the replica and the amount of thickness reduction of unexposed portions cause by the development. The amount of thickness reduction during the development varies according to the developing conditions and normally ranges from 5nm to 15nm.

A quinonediazido-novolak-based resist, a chemically amplified resist or the like can be employed for the positive photoresist film.

In the case of the quinonediazido-novolak-based resist, quinonediazido employed as the photosensitive material functions as a solution inhibitor against a water-soluble novolak resin and, hence, the novolak resin does not dissolve in an alkaline developing solution. However, exposure of quinonediazido to light loses the solution inhibiting function thereof, and consequently, the novolak resin dissolves in the alkaline developing solution to thereby form a desired signal pattern. In this case, the maximum absorption wavelength, i.e., the wavelength of light to which the photoresist films are exposed can be changed by changing the kind of quinonediazido.

In the case of the chemically amplified resist, an acid generator is used as the photosensitive material. While acid generated by exposure is acting as a catalyst, decomposition of the resin is activated as if it has caused a chain reaction, thereby enhancing the solubility of the resin in the developing solution. As a result, the desired signal pattern can be readily formed on the substrate. In this case, the maximum absorption wavelength can be changed by changing the kind of the acid generator and, hence, the wavelength of light to which the photoresist films are exposed can be changed.

Even when a positive photoresist other than the above photoresists is used, the wavelength of light to which the photoresist films are exposed can be changed by changing the photosensitive material.

A gas laser such as, for example, an argon laser or a krypton laser, or harmonics emitted from a solid laser such as, for example, a YAG laser can be used as light for recording signals.

The light for recording the signals is focused on the substrate by an objective lens 26 or 27 and means for driving the objective lens 26 or 27 in the axial direction of the lens for focusing control. More specifically, the two beams having different wavelengths, i.e., the first beam 13 having a wavelength shorter than the maximum absorption wavelength of the first photoresist film 21 and the second beam 14 having a wavelength longer than the maximum absorption wavelength of the first photoresist film 21 but shorter than the maximum absorption wavelength of the second photoresist film 22 are focused on the substrate by the associated objective lenses 26 and 27, respectively.

In general, the focal length of a lens varies according to the wavelength of light traveling therethrough. In view of this fact, the two beams 13 and 14 are simultaneously focused on the substrate by collimating one of them before it enters the associated objective lens, and by rendering the other beam to be a slightly diverging or converging beam before it enters the associated objective lens.

In optical discs, the signal pits are recorded on a spiral track or a plurality of coaxially aligned tracks. In practice, the spiral track, although continuous from one end to the opposite end, includes a plurality of turns each extending 360 about an axis of rotation of the disc. Because the distance between two adjoining turns or tracks is considerably short, one or both of the two beams are slightly inclined to form a given angle therebetween before they enter the associated objective lenses. By doing so, the two beams are simultaneously focused on the substrate while maintaining a desired distance therebetween, thereby enabling signal pits having different depths to be simultaneously recorded on two adjoining turns or tracks.

Accordingly, the master disc having two kinds of signal pits of different depths can be readily produced by the use of the method according to the above-described embodiment.

### Embodiment 4:

As shown in Fig. 5a, a substrate 1 made of, for example, a metal having a surface flattened by grinding or the like is initially coated with a first positive photoresist by the use of, for example, the spin coating technique. The first positive photoresist is then baked to thereby form a first photoresist film 31 on the substrate 1. A second positive photoresist having a maximum absorption wavelength longer than that of the first photoresist film 31 is coated over the first photoresist film 31 by the use of the spin coating technique or the like to thereby form a second photoresist film 32 on the first photoresist film 31.

Thereafter, a first beam 13 having a wavelength shorter than the maximum absorption wavelength of the first photoresist film 31 and a second beam 14 having a wavelength longer than the maximum absorption wavelength of the first photoresist film 31 but shorter than the maximum absorption wavelength of the second photoresist film 32 are intensity-modulated according to respective signals to be recorded using, for example, an optical modulator in which the electro-optical effect is utilized. As shown in Fig. 5b, upon throttling and radiating each of the first and second beams 13 and 14 to the substrate 1 coated with the two photoresist films 31 and 32, both of the first and second photoresist films 31 and 32 are partially simultaneously exposed to the first beam 13, while only the second photoresist film 32 is further partially exposed to the second beam 14. In Fig. 5b, portions exposed to the two beams 13 and 14 are indicated by hatching and are denoted by 33.

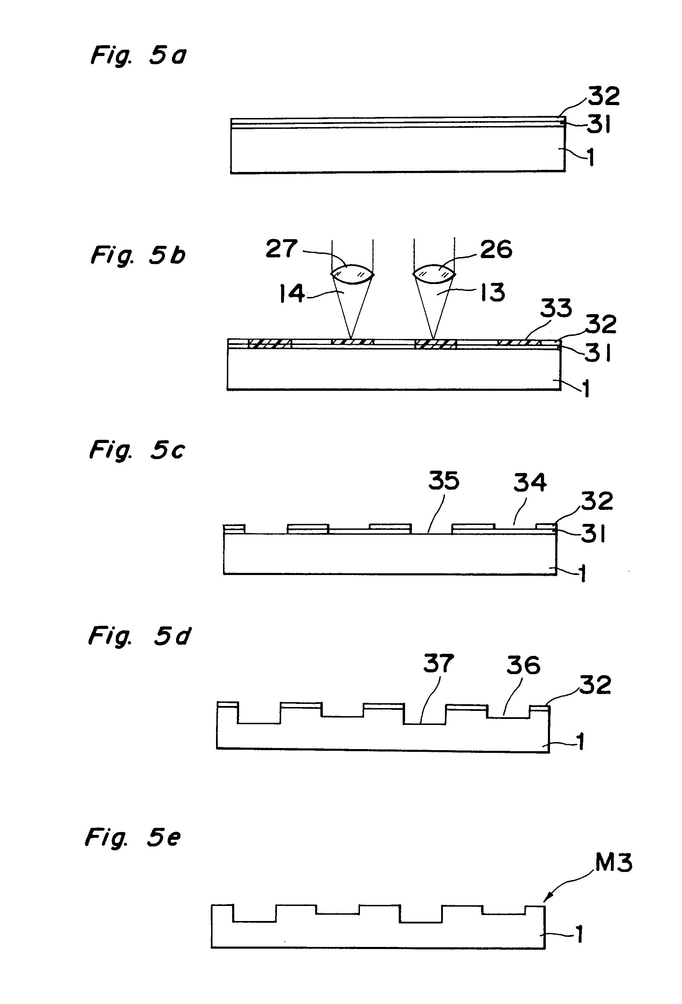

As shown in Fig. 5c, subsequent development results in removal of the exposed portions 33 of only the second photoresist film 32 to thereby form shallow recesses 34, and also simultaneous removal of the exposed portions 33 of both of the first and second photoresist films 31 and 32 to thereby form deep recesses 35.

The substrate 1 is then subjected to etching with the first and second photoresist films 31 and 32 employed as a mask. As a result, signal pits 36 and 37 having different depths are formed on the surface of the substrate 1, as shown in Fig. 5d. The depth of the signal pits 36 and 37 depends upon that of the recesses 34 and 35 defined in the first and second photoresist films 31 and 32, respectively.

Finally, the remaining photoresist films on the substrate 1 are removed with the use of an organic solvent such as, for example, a remover, or by ashing with the use of oxygen plasma.

Fig. 5e depicts a master disc M3 having two kinds of signal pits of different depths and obtained in the above-described manner.

Although the substrate 1 may be the same as that employed in the first embodiment, the use of a material having an etching rate different from that of the photoresist films 31 and 32 is preferred. The photoresist films 31 and 32 may be the same as those employed in the first embodiment.

Any one of ion beam etching, reactive ion beam etching, wet etching and the like can be employed. However, the use of anisotropic etching, for example, ion beam etching employing an ion gun for emitting an argon ion beam, is preferred whereby etching can be carried out in a direction perpendicular to the substrate.

According to this method wherein the signal pits are formed by etching with the photoresist films having the recesses employed as the mask, the depth of the signal pits can be controlled by the time period during which the etching is being carried out. Accordingly, the signal pits of desired depths can be stably obtained without being affected by variations in thickness of the second photoresist film or a reduction in thickness of the photoresist films caused by the development. Furthermore, an appropriate selection of the etching conditions can improve the configuration of the signal pits.

### Embodiment 5:

As shown in Fig. 6a, a substrate 1 made of, for example, glass having a surface flattened by grinding or the like is initially coated with a first negative photoresist by the use of, for example, the spin coating technique. The first negative photoresist is then baked to thereby form a first photoresist film 41 on the substrate 1. A second negative photoresist having a maximum absorption wavelength shorter than that of the first photoresist film 41 is coated over the first photoresist film 41 by the use of the spin coating technique or the like to thereby form a second photoresist film 42 on the first photoresist film 41.

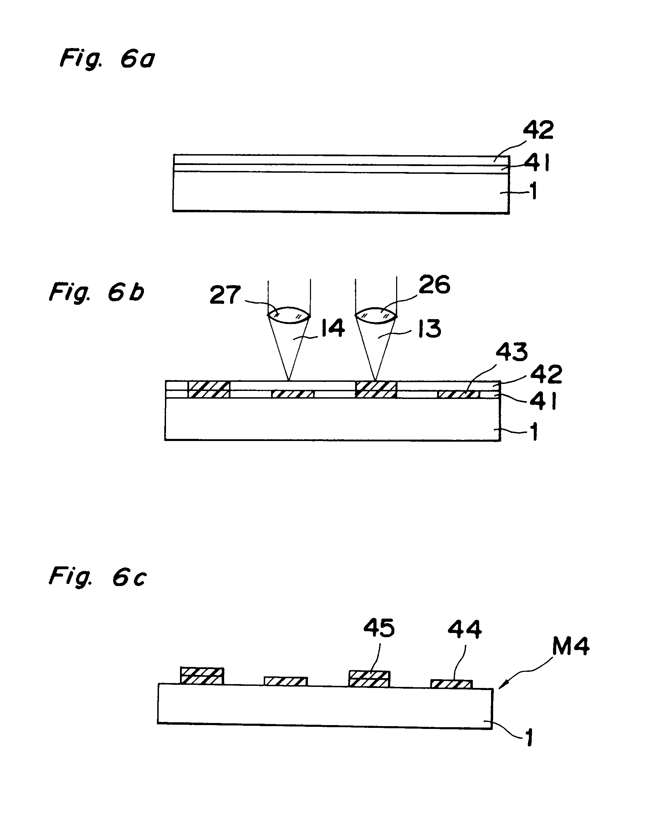

Thereafter, a first beam 13 having a wavelength shorter than the maximum absorption wavelength of the second photoresist film 42 and a second beam 14 having a wavelength shorter than the maximum absorption wavelength of the first photoresist film 41 but longer than the maximum absorption wavelength of the second photoresist film 42 are intensity-modulated according to respective signals to be recorded using, for example, an optical modulator in which the electro-optical effect is utilized. As shown in Fig. 6b, upon throttling and radiating each of the first and second beams 13 and 14 to the substrate 1 coated with the two photoresist films 41 and 42, both of the first and second photoresist films 41 and 42 are partially simultaneously exposed to the first beam 13, while only the second photoresist film 42 is further partially exposed to the second beam 14. In Fig. 6b, portions exposed to the two beams 13 and 14 are indicated by hatching and are denoted by 43.

As shown in Fig. 6c, subsequent development results in removal of unexposed portions of the photoresist films 41 and 42 to thereby form high projections 45 left at the exposed portions 43 of both of the first and second photoresist films 41 and 42 and low projections 44 left at the exposed portions 43 of only the first photoresist film 41.

In general, signals to be recorded on the substrate can take the form of either recesses or projections. In this embodiment, the signals take the form of the high and low projections 45 and 44. Because the height of the low projections 44 is determined by the thickness of the first photoresist film 41, whereas the height of the high projections 45 is determined by the sum of the thickness of the first photoresist film 41 and that of the second photoresist film 42, these heights can be stabilized by the method according to this embodiment.

Any suitable material other than glass may be employed as the material of the substrate if the surface of the substrate can be flattened by any suitable means. For example, a metal such as nickel, copper or the like, or a synthetic resin such as an acrylic resin can be employed for the substrate.

The thickness of the second photoresist film 42 is so chosen as to be equal to a value obtained by dividing the thickness difference between the two kinds of signal projections 44 and 45 by the refractive index n of the substrate of the replica. On the other hand, the thickness of the first photoresist film 41 is so chosen as to be equal to the height of the low projections 44 divided by the refractive index n of the substrate of the replica.

A chemically amplified photoresist containing a resin, an acid generator, and a crosslinking agent can be employed as the negative photoresist. In the case of the chemically amplified photoresist, the acid generator is used as the photosensitive material. While acid generated by exposure is acting as a catalyst, crosslinking of the resin is activated as if it has caused a chain reaction, thereby lowering the solubility of the resin in the developing solution. As a result, the desired signal pattern can be readily formed on the substrate. In this case, the maximum absorption wavelength can be changed by changing the kind of the acid generator and, hence, the wavelength of light to which the photoresist films are exposed can be changed.

Even when a negative photoresist other than the chemically amplified photoresists is used, the wavelength of light to which the photoresist films are exposed can be changed by changing the photosensitive material.

As discussed hereinabove, the present invention contributes to the production of the master disc having signal pits of different depths or signal projections of different heights. By the use of this master disc, replicas, i.e., high-density optical discs can be readily duplicated.

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

1. A method of making a master disc (M; M1; M2; M3) having first and second signal patterns (15, 16; 18, 19; 24, 25; 36, 37) of different depths, said method comprising the steps of:
(a) forming a first photoresist film (11; 21; 31) on a substrate (1);
(b) forming a second photoresist film (12; 22; 32) on the substrate (1) so as to overlay the first photoresist film (11; 21; 31);
(c) exposing to a first beam (13) first portions of the first photoresist film (11; 21; 31) and first portions of the second photoresist film (12; 22; 32) aligned with the first portions of the first photoresist film (11; 21; 31);
(d) exposing to a second beam (14) second portions of only the second photoresist film (12; 22; 32), said second portions being separate from the first portions of the second photoresist film (12; 22; 32); and
(e) developing the substrate (1) having the first and second photoresist films (11, 12; 21, 22; 31, 32) to thereby remove the first portions of the first photoresist film and the first and second portions of the second photoresist film (12; 22; 32).

2. The method according to claim 1, wherein said first beam (13) has an intensity sufficient to cause both of the first and second photoresist films (11, 12; 21, 22; 31, 32) to be exposed, and said second beam (14) has an intensity sufficient to cause only the second photoresist film (12; 22; 32) to be exposed.

3. The method according to claim 1, wherein said first photoresist film (11; 21; 31) has a sensitivity lower than that of the second photoresist film (12; 22; 32).

4. The method according to claim 1, wherein said first and second photoresist films (11, 12; 21, 22; 31, 32) have different maximum absorption wavelengths.

5. A method of making a master disc (M; M1; M2; M3) having first and second signal patterns (18, 19) of different depths, said method comprising the steps of:
(a) forming a first photoresist film (11) on a substrate (1);
(b) forming a boundary layer (17) on the substrate (1) so as to overlay the first photoresist film (11);
(c) forming a second photoresist film (12) on the substrate (1) so as to overlay the boundary layer (17);
(d) exposing to a first beam (13) first portions of the first photoresist film (11) and first portions of the second photoresist film
(12) aligned with the first portions of the first photoresist film (11);
(e) exposing to a second beam (14) second portions of only the second photoresist film
(12), said second portions being separate from the first portions of the second photoresist film (12); and
(f) developing the substrate (1) having the first and second photoresist films (11, 12) to thereby remove the first portions of the first photoresist film (11) and the first and second portions of the second photoresist film (12).

6. The method according to claim 5, wherein said first beam (13) has an intensity sufficient to cause both of the first and second photoresist films (11, 12) to be exposed, and said second beam (14) has an intensity sufficient to cause only the second photoresist film (12) to be exposed.

7. The method according to claim 5, wherein said first photoresist film (11) has a sensitivity lower than that of the second photoresist film (12).

8. The method according to claim 5, wherein said first and second photoresist films (11, 12) have different maximum absorption wavelengths.

9. The method according to claim 5, wherein said boundary layer (17) is a modified layer formed on the first photoresist film (11) by baking the surface of the first photoresist film (11).

10. The method according to claim 5, wherein said boundary layer (17) is a modified layer formed on the first photoresist film (11) by developing the first photoresist film (11).

11. The method according to claim 5, wherein said boundary layer (17) is a contrast enhanced layer (CEL) formed on the first photoresist film (11 ).

12. The method according to claim 3, wherein only the first photoresist film (11; 21; 31)) is baked.

13. The method according to claim 7, wherein only the first photoresist film (11) is baked.

14. The method according to claim 9, wherein said first photoresist film (11) is baked in an atmosphere containing at least one of nitrogen, oxygen, argon, and krypton.

15. The method according to claim 12, wherein said first photoresist film (11; 21; 31) is baked in an atmosphere containing at least one of nitrogen, oxygen, argon, and krypton.

16. The method according to claim 13, wherein said first photoresist film (11) is baked in an atmosphere containing at least one of nitrogen, oxygen, argon, and krypton.

17. The method according to claim 4, wherein said first beam (13) has a first wavelength capable of causing both of the first and second photoresist films (11, 12; 21, 22; 31, 32) to be exposed, and said second beam (14) has a second wavelength capable of causing only the second photoresist film (12; 22; 32) to be exposed.

18. The method according to claim 8, wherein said first beam (13) has a first wavelength capable of causing both of the first and second photoresist films (11, 12) to be exposed, and said second beam (14) has a second wavelength capable of causing only the second photoresist film (12) to be exposed.

19. The method according to claim 17, wherein each of said first and second photoresist films (11, 12; 21, 22; 31, 32) is of a positive type, wherein the maximum absorption wavelength of the first photoresist film (11; 21; 31) is shorter than that of the second photoresist film (12; 22; 32), and wherein said first wavelength is shorter than the maximum absorption wavelength of the first photoresist film (11; 21; 31), and said second wavelength is longer than the maximum absorption wavelength of the first photoresist film (11; 21; 31), but is shorter than the maximum absorption wavelength of the second photoresist film (12; 22; 32).

20. The method according to claim 18, wherein each of said first and second photoresist films (11, 12) is of a positive type, wherein the maximum absorption wavelength of the first photoresist film (11) is shorter than that of the second photoresist film (12), and wherein said first wavelength is shorter than the maximum absorption wavelength of the first photoresist film (11), and said second wavelength is longer than the maximum absorption wavelength of the first photoresist film (11), but is shorter than the maximum absorption wavelength of the second photoresist film (12).

21. The method according to claim 19, further comprising, prior to the step (e), the steps of: developing the substrate (1) having the first and second photoresist films (31, 32) to thereby form first and second recesses (34, 35) defined in the substrate (1) and having different depths; and etching the substrate (1) with the first and second photoresist films (31, 32) employed as a mask.

22. A method of making a master disc (m4) having first and second signal patterns (44, 45) of different heights, said method comprising the steps of:
(a) forming a first photoresist film (41) on a substrate (1);
(b) forming a second photoresist film (42) on the substrate (1) so as to overlay the first photoresist film (41);
(c) exposing to a first beam (13) first portions of the first photoresist film (41) and first portions of the second photoresist film (42) aligned with the first portions of the first photoresist film (41);
(d) exposing to a second beam (14) second portions of only the first photoresist film
(41), said second portions being separate from the first portions of the first photoresist film (41); and
(e) developing the substrate (1) having the first and second photoresist films (41, 42) to thereby remove remaining portions of the first and second photoresist films (41, 42) other than the first and second portions of the first and second photoresist films (41, 42).

23. The method according to claim 22, wherein said first and second photoresist films (41, 42) have different maximum absorption wavelengths.

24. The method according to claim 23, wherein each of the first and second photoresist films (41, 42) is of a negative type, wherein the maximum absorption wavelength of the first photoresist film (41) is longer than that of the second photoresist film (42), and wherein said first beam (13) has a wavelength shorter than the maximum absorption wavelength of the second photoresist film (42), and said second beam (14) has a wavelength shorter than the maximum absorption wavelength of the first photoresist film (41), but longer than the maximum absorption wavelength of the second photoresist film (42).
